Europäisches Patentamt

(19) European Patent Office

Office européen des brevets

(11) Numéro de publication : **0 098 782**
**B1**

(12) **FASCICULE DE BREVET EUROPÉEN**

(45) Date de publication du fascicule du brevet :
30.09.87

(51) Int. Cl.⁴ : **G 06 K 19/08, G 07 C 9/00**

(21) Numéro de dépôt : **83420091.7**

(22) Date de dépôt : **02.06.83**

(54) **Système de reconnaissance et/ou d'identification et support d'informations s'y rapportant.**

(30) Priorité : **04.06.82 FR 8209799**

(43) Date de publication de la demande :
**18.01.84 Bulletin 84/03**

(45) Mention de la délivrance du brevet :
**30.09.87 Bulletin 87/40**

(84) Etats contractants désignés :
**AT BE CH DE FR GB IT LI LU NL SE**

(56) Documents cités :
**EP-A- 0 004 559**
**FR-A- 2 289 989**
**GB-A- 1 181 760**
**US-A- 3 569 619**
**IBM TECHNICAL DISCLOSURE BULLETIN, vol. 11, no. 7, décembre 1968, pages 738-739, New York, USA R.T. CHASE et al.: "Security identification and lock-actuating device"**

(73) Titulaire : **Savoyet, Jean-Louis Paul Jules**
**La Mayrie**
**F-38770 La Motte d'Aveillans (FR)**

**Molé, Alain Marie-Louis**
**138, avenue Ambroise-Croizat**
**F-38400 Saint-Martin d'Hères (FR)**

(72) Inventeur : **Savoyet, Jean-Louis Paul Jules**
**La Mayrie**
**F-38770 La Motte d'Aveillans (FR)**
Inventeur : **Molé, Alain Marie-Louis**
**138, avenue Ambroise-Croizat**
**F-38400 Saint-Martin d'Hères (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

EP 0 098 782 B1

## Description

La présente invention concerne un système de reconnaissance et/ou d'identification, lequel comprend un support d'informations portatif muni de moyens pour sa reconnaissance, et un dispositif de réception du support d'informations, muni de moyens de reconnaissance du support lorsque celui-ci est associé au dispositif de réception. L'invention concerne également le support d'informations.

Les dispositifs d'informations portatifs actuellement connus se présentent sous la forme de clé ou de badge. Les clés connues peuvent être du type mécanique et comprendre à cet effet une partie dont la forme représente le code de la clé, ou peuvent être du type électronique et comprendre des moyens électroniques qui renferment le code de la clé. A ces clés, on associe dans le premier cas une serrure du type mécanique et comprenant à cet effet une partie dont la forme correspond à la forme de la clé et dans le second cas une serrure dite électronique comprenant des moyens électroniques capables de reconnaître le code que contient la clé. Par ailleurs, les cartes actuelles portent en général des écritures relatives à leur utilisateur et une partie magnétique renfermant un code susceptible d'être lu par défilement de la carte devant une tête de lecture.

L'un des inconvénients de ces supports d'informations réside dans le fait que le ou les codes qu'ils portent ne permettent que leur propre identification.

On connaît également par le brevet britannique GB-A-1 181 760, une carte de crédit portant un microfilm muni d'informations visibles après agrandissement. Le microfilm qui peut inclure une photographie du titulaire, est placé entre deux épaisseurs de matière plastique transparente et est visionné à l'aide d'une source de lumière extérieure. R.T. Chase et C.J. Knudsen ont par ailleurs décrit dans IBM Technical Disclosure Bulletin (Volume II, Numéro 7, décembre 1968) sous le titre « Security identification and lock-actuating device » un support d'information portatif en forme de carte ou de clé présentant une pluralité de photodiodes qui peuvent être mises sous tension par l'intermédiaire d'un circuit électrique relié à une source de courant électrique.

La présente invention a pour but de fournir un système de reconnaissance et/ou d'identification qui permette non seulement la reconnaissance du support d'informations grâce aux moyens mécaniques ou électroniques dont il est muni, mais également l'identification de son utilisateur de manière plus simple que dans les dispositifs connus et en augmentant la sécurité.

Tel qu'il est revendiqué, le système de reconnaissance et/ou d'identification comprend :

a) un support d'informations portatif muni de moyens pour sa reconnaissance et portant une microphotographie dont le contenu se rapporte à l'utilisateur du support, et

b) un dispositif de réception du support d'informations muni de moyens de reconnaissance du support et de moyens de reprise par voie optique de l'image de la micro-photographie en vue d'identifier l'utilisateur, caractérisé en ce que le support d'informations comporte un moyen d'éclairage placé à côté de la micro-photographie pour projeter l'image vers les moyens de reprise, et la micro-photographie est recouverte par une trame électrique qui relie ledit moyen d'éclairage à une source électrique.

La micro-photographie dont le contenu se rapporte à l'utilisateur peut être un cliché optique ou holographique, notamment de son visage (ou de ses empreintes digitales).

Afin de ne faire fonctionner le moyen d'éclairage que lorsque le support d'informations est associé au dispositif de réception, le support d'informations peut comprendre un interrupteur, actionnable manuellement ou automatiquement par l'enfoncement et le positionnement du support dans le dispositif de réception.

En variantes et avantageusement le support d'informations et le dispositif de réception comprennent des plots de contact en correspondance, susceptibles de créer une liaison électrique entre le moyen d'éclairage et une source d'énergie électrique lorsqu'ils sont associés.

La source d'énergie électrique peut être logée dans le support d'informations, sous forme d'une pile par exemple. Cependant, pour des questions d'encombrement, de coût, et surtout de commodité, on préfère disposer la source d'énergie hors du support d'informations. Dans ce cas, la source d'énergie peut être une pile, une batterie d'accumulateurs ou tout simplement le secteur.

Selon un mode particulier de l'invention, on peut prévoir, pour les moyens de reprise, une caméra vidéo captant l'image de la micro-photographie. Dans une variante, les moyens de reprise comprennent un écran de télévision reproduisant l'image captée par la caméra vidéo. Dans une autre variante, les moyens de reprise comprennent des moyens pour mémoriser l'image captée par la caméra vidéo.

La présente invention se rapporte également à un support d'informations se présentant sous la forme d'une clé comprenant une partie de préhension et une partie allongée munie de moyens pour sa reconnaissance, caractérisé par le fait qu'il porte en outre une micro-photographie incluse longitudinalement dans la partie allongée et placée d'un côté d'une paroi transparente ménagée dans celle-ci, un moyen d'éclairage placé de l'autre côté de la paroi transparente et une trame électrique reliant ledit moyen d'éclairage à une source d'énergie électrique. Avantageusement, des plots de contact sont prévus, de préférence sur la partie allongée, pour créer une liaison électrique entre le moyen d'éclairage et une source d'énergie électrique, ce contact étant possible seulement après la reconnaissance du support d'informations.

On peut également prévoir de placer un élément diffuseur de lumière entre le moyen d'éclairage et la micro-photographie.

La trame électrique permet au système de reconnaissance (éclairage de la photographie ou moyens de reprise par voie optique de l'image) de fonctionner correctement. L'échange de la photographie ou micro-photographie devient impossible parce que le circuit d'éclairage de la photographie ou de la reprise par voie optique de l'image est interrompu et il ne peut plus permettre l'identification de l'utilisateur.

Dans une autre variante, l'éclairage de l'ampoule ou la reprise par voie optique de l'image se fait directement par le circuit du code de reconnaissance plutôt que par un circuit indépendant.

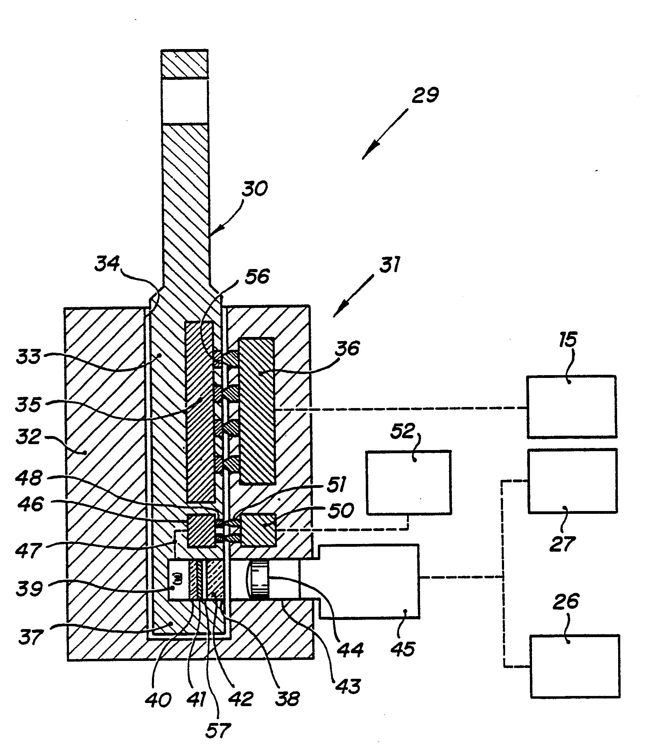

La présente invention sera mieux comprise en référence au dessin annexé, donné à titre d'exemple, où :

la figure unique est une vue en coupe d'un système selon l'invention.

On a représenté sur la figure un système de reconnaissance et d'identification repéré d'une manière générale par la référence 29 et comprenant une clé repérée d'une manière générale par la référence 30 et un dispositif de réception repéré d'une manière générale par la référence 31 qui comprend un bloc de réception 32 de la clé 30. La clé 30 et le bloc de réception 32 ont des formes complémentaires.

L'ensemble de contact 36 est relié électriquement à un circuit électronique 15 que comprend le dispositif de réception 31, ce circuit électronique 15 étant conçu pour la lecture, le contrôle et le traitement du code que contient l'ensemble électronique 35 de la clé 30 par exemple en vue de la commande de l'ouverture d'une porte ou en vue de toute autre opération de commande ou de traitement telle que des opérations de crédit. L'ensemble électronique 35 que porte la clé 30 et le circuit électronique 15 du dispositif de réception 31, qui ne font pas directement partie de l'exemple décrit, peuvent être réalisés, par exemple conformément aux demandes de brevet EP-A-0 037 566, EP-A-0 065 181 et EP-A-0 065 182 du demandeur.

La partie avant 33 de la clé 30 et le bloc 32, qui présente un orifice 34 de réception de cette partie avant, portent respectivement un ensemble électronique 35 renfermant un code et muni de plots de contact 56 et un ensemble de plots de contact 36 portant des plots susceptibles de venir en appui sur les plots de contact 56 de l'ensemble électronique 35 pour former des connexions électriques.

L'extrémité avant 37 de la partie avant 33 de la clé 30 présente un orifice borgne 38 débouchant transversalement. Dans cet orifice borgne 38, sont disposés successivement, à partir du fond de ce dernier, une ampoule électrique 39, un diffuseur de lumière 40, une micro-photographie 41 et une pastille 42 en un matériau susceptible d'être traversé par la lumière, par exemple en un matériau transparent, cet ensemble étant inséré dans l'orifice borgne 38.

En face de l'orifice borgne 38 et du côté de la pastille translucide 42, lorsque la clé 30 est introduite dans le bloc de réception 32, ce bloc de réception 32 présente un passage 43 dans lequel est également disposé un ensemble optique d'agrandissement 44 tandis qu'une caméra vidéo 45 est placée du côté extérieur de ce passage 43.

En vue d'alimenter en énergie électrique l'ampoule électrique 39, un bloc de contact électrique 46 relié à l'ampoule électrique 39 par un fil électrique 47 est inséré dans la partie avant 33 de la clé 30 et comporte des plots de contact 48 qui sont au niveau de la paroi 49 de cette partie avant 33. Le bloc de réception 32 porte, en face du bloc de contact électrique 46, lorsque la partie avant 33 de la clé 30 est complètement introduite dans l'orifice 34, un bloc de contact électrique 50 qui comporte des plots de contact 51 correspondant aux plots de contact 48 et qui est relié à une source d'énergie électrique 52, de telle sorte que, lorsque la partie avant 33 de la clé 30 est introduite dans l'orifice 34 du bloc de réception 32, l'ampoule électrique 39 est alimentée en énergie électrique.

Le flux lumineux qu'émet alors l'ampoule électrique 39 traverse le diffuseur de lumière 40, la micro-photographie 41 et la partie translucide 42. L'image de la micro-photographie 41 est alors agrandie par l'ensemble optique d'agrandissement 44 et est reprise par la caméra vidéo 45. Les signaux de sortie de la caméra vidéo 45 peuvent être envoyés à un écran et/ou à un circuit électronique de mémorisation, par exemple à l'écran 26 et au circuit électronique 27.

La micro-photographie 41 est recouverte par une trame électrique 57 qui relie le moyen d'éclairage 39 à la source électrique 52. Si la micro-photographie a été substituée, la trame électrique est cassée et l'éclairage ne peut plus se faire.

Il va sans dire que le moyen d'éclairage 39 peut se relier à la source électrique 52 seulement si le circuit électronique 15 a reconnu l'ensemble électronique 35 de la clé 30.

## Revendications

1. Système de reconnaissance et/ou d'identification comprenant :

a) un support d'informations portatif (30) muni de moyens (35) pour sa reconnaissance et portant une micro-photographie (41) dont le contenu se rapporte à l'utilisateur du support (30), et

b) un dispositif de réception (31) du support d'informations (30) muni de moyens de reconnaissance (15) du support (30) et de moyens de reprise (44) par voie optique de l'image de la micro-photographie (41) en vue d'identifier l'utilisateur, caractérisé par le fait que le support d'informations (30) comporte un moyen d'éclairage (39) placé à côté de la micro-photographie (41) pour projeter l'image vers les moyens de reprise (44), et que la micro-photographie est recouverte par une trame électrique (57) qui relie ledit moyen d'éclairage (39) à une source électrique (52).

2. Système selon la revendication 1, caractérisé par le fait que le support d'informations (30) et le dispositif de réception (31) comprennent des plots de contact en correspondance (51, 48) susceptibles de créer la liaison électrique entre le moyen d'éclairage (39) et la source d'énergie électrique (52), cette liaison étant soumise à la reconnaissance du support (30) par les moyens de reconnaissance (35) du support (30) et les moyens de reconnaissance (15) du dispositif de réception (31).

3. Système selon l'une des revendications 1 et 2 caractérisé par le fait que les moyens de reprise comprennent une caméra vidéo (45) pouvant capter l'image de la micro-photographie (41).

4. Système selon la revendication 3, caractérisé par le fait que les moyens de reprise comprennent un écran de télévision (26) capable de rétablir l'image captée.

5. Système selon la revendication 5, caractérisé par le fait que les moyens de reprise comprennent des moyens (27) pour mémoriser l'image captée.

6. Support d'informations se présentant sous la forme d'une clé (30) comprenant une partie de préhension et une partie allongée munie de moyens (35) pour sa reconnaissance, car, par le fait qu'il porte en outre une micro-photographie (41) incluse longitudinalement dans la partie allongée et placée d'un côté d'une paroi transparente ménagée·dans celle-ci, un moyen d'éclairage (39) placé de l'autre côté de la paroi transparente et une trame électrique (57) reliant ledit moyen d'éclairage (39) à une source d'énergie électrique.

7. Support d'informations selon la revendication 6, caractérisé par le fait qu'il comprend des plots de contact (51, 48) pour créer la liaison électrique entre le moyen d'éclairage (39) et la source d'énergie électrique (52).

8. Support d'informations selon l'une des revendications 6 ou 7, caractérisé par le fait qu'entre le moyen d'éclairage et la micro-photographie est placé un élément diffuseur de lumière.


**Claims**

1. Recognition and/or identification system comprising :

a) a portable information carrier (30) equipped with means (35) for its recognition and carrying a micro-photograph (41) the content of which relates to the user of the carrier (30), and

. b) a device (31) for reception of the information carrier (30) equipped with means (15) for recognition of the carrier (30) and means (44) for optical detection of the image of the micro-photograph (41) for the purpose of identifying the user, characterised in that the information carrier (30) comprises an illumination means (39) placed beside the micro-photograph (41) to project the image towards the detection means (44), and in that the micro-photograph is covered by an electric screen (57) which connects the said illumination means (39) to an electric source (52).

2. System according to Claim 1, characterised in that the information carrier (30) and the reception device (31) comprise corresponding contact studs (51, 48) capable of creating the electrical connection between the illumination means (39) and the electrical energy source (52), this connection being subjected to the recognition of the carrier (30) by the means (35) for recognition of the carrier (30) and the means (15) for recognition of the reception device (31).

3. System according to one of Claims 1 and 2, characterised in that the detection means comprise a video camera (45) capable of picking up the image of the micro-photograph (41).

4. System according to Claim 3, characterised in that the detection means comprise a television screen (26) capable of reproducing the picked-up image.

5. System according to Claim 5, characterised in that the detection means comprise means (27) for memorising the picked-up image.

6. Information carrier presented in the form of a key (30) comprising a part for grasping and an elongated part equipped with means (35) for its recognition, characterised in that it further carries a micro-photograph (41) included longitudinally in the elongated part and placed on one side of a transparent wall formed in the latter, an illumination means (39) placed on the other side of the transparent wall and an electric screen (57) connecting the said illumination means (39) to a source of electrical energy.

7. Information carrier according to Claim 6, characterised in that it comprises contact studs (51, 48) to create the electrical connection between the illumination means (39) and the electrical energy source (52).

8. Information carrier according to one of Claims 6 or 7, characterised in that a light diffuser element is placed between the illumination means and the micro-photograph.


**Patentansprüche**

1. Erkennungs- und/oder Identifizierungssystem, bestehend aus :

. a) einem tragbaren Informationsträger (30), der mit einer seiner Erkennung dienenden Einrichtung (35) versehen ist und eine Mikro-Photographie (41) trägt, deren Inhalt sich auf den Benutzer des Informationsträgers (30) bezieht, und

b) einer Aufnahme-Vorrichtung (31) für den Informationsträger (30), die mit einer Erkennungseinrichtung (15) für den Informationsträger (30) und mit einer optischen Erfassungseinrichtung (44) für das Bild der Mikro-Photographie (41) zwecks Identifizierung des Benutzers, dadurch gekennzeichnet, daß der Informationsträger (30) eine Beleuchtungseinrichtung (39) aufweist, die seitlich der Mikro-Photographie (41) zur Projektion des Bildes auf die Erfassungseinrichtung (44) angeordnet ist, und daß die Mikro-Photographie von einem elektrischen Raster (57) überdeckt ist, der die Beleuchtungseinrichtung (39) mit einer Stromquelle (52) verbindet.

2. System nach Anspruch 1, dadurch gekennzeichnet, daß der Informationsträger (30) und die Aufnahmevorrichtung (31) einander zugeordnete Kontakte (51, 48) zur Herstellung der elektrischen Verbindung zwischen der Beleuchtungseinrichtung (39) und der Stromquelle (52) aufweisen, wobei diese Verbindung von der Erkennung des Informationsträgers (30) durch die Erkennungseinrichtung (35) des Informationsträgers (30) und die Erkennungseinrichtung (15) der Aufnahmevorrichtung (31) abhängig ist.

3. System nach Anspruch 1 oder 2, dadurch gekennzeichnet, daß die Erfassungseinrichtung eine das Bild der Mikro-Photographie (41) erfassende Videokamera (45) aufweist.

4. System nach Anspruch 3, dadurch gekennzeichnet, daß die Erfassungseinrichtung eine das erfaßte Bild wiedergebenden Fernsehbildschrim (26) aufweist.

5. System nach Anspruch 4, dadurch gekennzeichnet, daß die Erfassungseinrichtung eine Einrichtung zum Speichern (27) des erfaßten Bildes aufweist.

6. Schlüsselförmiger Informationsträger (30) mit einem Griffteil und einem mit einer seiner Erkennung dienenden Einrichtung (35) versehenen Fortsatz, dadurch gekennzeichnet, daß er außerdem eine Mikro-Photographie (41) trägt, die der Länge nach im Fortsatz eingeschlossen und an einer Seite einer in diesem angeordneten durchsichtigen Trennwand angeordnet ist, wobei an der anderen Seite der durchsichtigen Trennwand eine Beleuchtungseinrichtung (39) angeordnet ist, die über einen elektrischen Raster (57) mit einer elektrischen Energiequelle (52) verbunden ist.

7. Informationsträger nach Anspruch 6, dadurch gekennzeichnet, daß er Kontakte (48) zur Herstellung der elektrischen Verbindung zwischen der Beleuchtungseinrichtung (39) und der elektrischen Energiequelle (52) aufweist.

8. Informationsträger nach Anspruch 6 oder 7, dadurch gekennzeichnet, daß zwischen der Beleuchtungseinrichtung und der Mikrophotographie ein optisches Diffusorelement angeordnet ist.